# EUROPEAN PATENT APPLICATION

(11) **EP 4 502 369 A1**
(43) Date of publication of application: **05.02.2025**
(21) Application number: 23189139.1
(22) Date of filing: 02.08.2023
(51) Int. Cl.: F03D 15/10, F03D 80/50

(54) **HANDLING APPARATUS**

(71) Applicant: Siemens Gamesa Renewable Energy A/S, 7330 Brande (DK)
(72) Inventor: Rogg, Andreas, 22605 Hamburg (DE)
(74) Representative: SGRE-Association

(57) **Abstract**

The invention describes a handling apparatus (1) for use in a maintenance procedure of a wind turbine drivetrain (2) comprising a low-speed unit (22) and a high-speed unit (24) coaxially coupled to the low-speed unit (22), which handling apparatus (1) is configured to be arranged in the interior of a wind turbine nacelle (6) and comprises a front-end anchor (10) configured for mounting onto the low-speed unit (22) of such a drivetrain (2); a suspension assembly (100) extending from the front-end anchor (10) towards the rear of the nacelle (6); a primary carriage (14) carried by the suspension assembly (100) and configured for attachment to the high-speed unit (24) of the drivetrain (2); and a displacement means (16, 160) realized to displace the primary carriage (14) along the suspension assembly (10) relative to the front-end anchor (10). The invention further describes a method of performing a maintenance procedure on a wind turbine drivetrain (2) using such a handling apparatus (1).

## Description

### Background

A wind turbine drivetrain can comprise a main shaft turned by the slowly rotating aerodynamic rotor (usually with three rotor blades mounted to a hub), and a gearbox for converting the low-speed rotation of the main shaft into high-speed rotation of the generator rotor. The type of drivetrain discussed herein shall be understood to relate to a large wind turbine, for example a wind turbine with rated power output in the order of 5 to 20 MW.

A low-speed unit of this type of drivetrain can comprise the main shaft or "low-speed shaft", a main bearing arrangement, and a bearing housing. The main bearing arrangement may comprise a first bearing or "front bearing" arranged about the drive end of the low-speed shaft, and a second bearing or "rear bearing" arranged about the non-drive end of the low-speed shaft. These can be realized to deploy roller bearings, for example tapered roller bearings. The bearing housing is a large structure shaped to keep both bearings in place about the main shaft and to prevent contaminants from entering or leaving the bearings.

The high-speed unit of this type of drivetrain comprises a planetary gearbox and a generator mounted to the output shaft of the planetary gearbox in cantilever fashion. The planetary gearbox and the generator are also generally provided with housings to prevent contaminants from entering or leaving. The low-speed unit is generally anchored securely to a mainframe or bedplate which in turn transfers drivetrain loads to the wind turbine tower.

The low-speed shaft of the wind turbine must be connected in some way to the gearbox first stage. While it is possible to connect the non-drive end of the low-speed shaft directly to the gearbox first stage, it can be preferable to connect the low-speed unit and high-speed unit by an intermediate part. Regardless of the manner in which it is realised, the connection between low-speed shaft and gearbox is referred to in the following as the "coupling interface".

An important constraint in wind turbine drivetrain design is the overall length of the drivetrain, which should be as compact as possible. This generally means that a coupling interface should also be very compact. A short coupling interface axis is preferable for reasons of torque transfer efficiency. However, a compact coupling interface design comes at the cost of access, i.e. it is generally significantly more difficult to access certain components in the coupling interface region, i.e. the region between the non-drive end of the low-speed unit and the drive-end of the high-speed unit. Since the high-speed unit of such a drivetrain cannot simply be moved away from the low-speed unit to access the coupling interface region, it may be necessary to dismantle the high-speed unit of the drivetrain in order to access a defective part in the coupling interface region. However, such a disassembly procedure is very time-consuming and hazardous, and is also very expensive due to the need for a sufficiently large crane.

An alternative approach is to design the drivetrain to avoid maintenance issues for parts located in the coupling interface region, for example by deploying maintenance-free bolts and sealing systems. However, the cost of engineering all coupling region parts to avoid maintenance throughout the service life of the wind turbine can be prohibitively expensive.

It is therefore an object of the invention to provide a solution to the problems outlined above.

This object is achieved by the claimed handling apparatus and by the claimed method of performing a maintenance procedure on a wind turbine drivetrain.

### Description

In the context of the invention, a wind turbine drivetrain shall be understood to comprise a low-speed unit and a high-speed unit coaxially coupled to the high-speed unit as described above. It shall be understood that the high-speed unit can be uncoupled from the low-speed unit in preparation for a maintenance procedure.

According to the invention, the handling apparatus for such a wind turbine drivetrain is designed to be arranged in the interior of a wind turbine nacelle and comprises a front-end anchor configured for mounting onto the housing of the low-speed unit of such a drivetrain (so that the front-end anchor effectively sits on the low-speed unit); a suspension assembly extending from the front-end anchor towards the rear of the nacelle; a primary carriage carried by the suspension assembly and configured for attachment to the high-speed unit of such a drivetrain; and a drive unit realized to displace the primary carriage (along with the suspended high-speed unit) relative to the front-end anchor (after uncoupling the high-speed unit of the drivetrain from the low-speed unit).

As explained above, the low-speed unit of such a drivetrain cannot simply be moved away from the high-speed unit. The invention provides an advantageously straightforward way of overcoming this obstacle to enable access to parts, located in the coupling interface region, that could otherwise not be reached without a costly step of dismantling of the high-speed unit. The approach taken by the invention is to exploit the immobile front end of the drivetrain, so that the weight of the high-speed unit can be carried while moving the entire high-speed unit away from the low-speed unit (towards the rear end of the nacelle). In this way, it is possible to move the uncoupled high-speed unit away from the low-speed unit to create more space in the coupling interface region between these drivetrain units. A technician can then access a defective part in the coupling region. The cost of providing the inventive handling apparatus can be significantly less than the accumulated costs of performing maintenance to coupling interface region parts using only the prior art methods during the lifetime of the wind turbine.

According to the invention, the method of performing a maintenance procedure on such a wind turbine drivetrain comprises the steps of mounting the front-end anchor of the inventive handling apparatus onto the low-speed unit; arranging the suspension assembly to extend from the front-end anchor towards the rear of the nacelle; attaching the high-speed unit to the primary carriage of the handling apparatus; uncoupling the high-speed unit from the low-speed unit; and actuating the drive unit of the handling apparatus to displace the primary carriage along the suspension assembly relative to the front-end anchor to move the entire high-speed unit away from the low-speed unit, thereby providing access to the coupling interface region and facilitating its maintenance, repair or replacement.

An advantage of the inventive method is that access to parts in the coupling region is facilitated without a time-intensive and costly procedure of partially or completely dismantling the high-speed unit for removal from the drivetrain. Instead, the entire high-speed unit is left whole and moved as a single entity away from the uncoupled low-speed unit.

According to the invention, such a wind turbine drivetrain is constructed so that a housing of the low-speed unit comprises an interface for engaging with the front-end anchor of the inventive handling apparatus, and a housing of the high-speed unit comprises an interface for engaging with the primary carriage of the inventive handling apparatus.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that a drivetrain part to be accessed in a maintenance procedure is any of: a seal of the non-drive end bearing of the main bearing arrangement, a gearbox seal, a coupling unit part, a bolt or expansion pin connection, a locking mechanism of the rear bearing inner ring, a cable conduit or "pitch tube", a pitch tube sealing, a pitch tube attachment, etc. These parts are all located in the narrow coupling region between low-speed unit and high-speed unit and are difficult or impossible to access directly with only the possibilities known from the prior art.

As described above, the low-speed unit comprises a low-speed shaft, a number of bearings in place about the low-speed shaft, and a housing to enclose the bearings and low-speed shaft. The housing of the low-speed unit shall be understood to be secured to the nacelle bedplate for normal operation of the drivetrain so that drivetrain loads can be transferred through the bedplate into the wind turbine tower.

The high-speed unit comprises a planetary gearbox and a generator mounted to the output shaft of the planetary gearbox in cantilever fashion. The planetary gearbox is also enclosed in a housing, which is connected to the low-speed unit by means of the coupling interface.

In the following, without restricting the invention in any way, it may be assumed that the handling apparatus comprises a robust framework constructed to bear the weight of the suspended drivetrain units by transferring loads via the front-end anchor to the low-speed unit housing and bedframe, and from the bedframe into the tower.

The front-end anchor is preferably a rigid structure constructed to "sit on" or "straddle" the low-speed unit, making use of the entire length of the low-speed unit. For example, the front-end anchor can have a rectangular base and several structural members extending from the rectangular base to converge at a point some distance above the rectangular base, giving the front-end anchor an essentially triangular form when viewed from the side. In an exemplary embodiment, the front-end anchor extends between the low-speed unit and a structural member of the nacelle, for example part of a nacelle framework located in the ceiling of the nacelle. This framework shall be assumed to be connected to the bedframe. By installing the front-end anchor to extend between low-speed unit and nacelle framework, the weight of the high-speed unit - when displaced along the suspension assembly using the carriage - is optimally transferred to the bedplate.

Preferably, the suspension assembly is realised in cantilever fashion, with its "free" end extending towards the rear of the nacelle. The suspension assembly can comprise a single cantilever beam arranged, for example, to run parallel to and above the rotational axis of the drivetrain (arranged so that its long axis is in line with the rotation axis of the drivetrain). However, since the high-speed unit is very heavy, in a particularly preferred embodiment of the invention the suspension assembly comprises at least two parallel cantilever beams. A beam of the suspension assembly is arranged at some height above the widest part of the drivetrain. Each beam shall be understood to be a one-piece component. In a preferred embodiment of the invention, each beam of the suspension assembly commences at the upwind end of the front-end anchor and extends some distance beyond the rear of the drivetrain.

The primary carriage can be moved back and forth along the beam(s) of the suspension assembly, i.e. to move in a downwind direction (towards the rear of the nacelle) and in an upwind direction (towards the front of the nacelle). To this end, the displacement means can comprise a motor-driven spindle, chain-drive, winch, roller conveyor, trolley or similar configured to displace the primary carriage along the beam(s) of the suspension assembly.

In a preferred embodiment of the invention, in order to support the weight of the load in an optimal manner, one or more tension rods can extend from the apex of the front-end anchor to a point along a beam.

In a further preferred embodiment of the invention, in order to counteract or reduce the stresses or interface loads exerted by the front-end anchor on the housing of the low-speed unit, a counterweight is provided for attaching to the upwind end of the front-end anchor.

The inventive handling apparatus preferably comprises a support structure which can be arranged between the suspension assembly and the bedplate. For example, a support structure can be realised as a continuation of the bedplate, shaped to extend upwards about the drivetrain (towards the nacelle ceiling), and realised for connection to the suspension assembly.

The housing of the high-speed unit of the wind turbine drivetrain is preferably equipped with an interface for engaging with the primary carriage of the inventive handling apparatus. For example, the housing of a drivetrain unit can be provided with fittings to receive large threaded fasteners to facilitate a bolted connection to the primary carriage. Alternatively or in addition, lifting lugs could be incorporated in the body of the housing for connection to the primary carriage.

As explained above, the coupling unit of such a drivetrain can comprise a number of annular parts connected to create a robust intermediate assembly that bridges the gap between the non-drive end of the low-speed shaft and the first stage of the planetary gearbox. The coupling unit may also comprise a housing that extends between the main bearing housing and the gearbox housing. The housing can be equipped with features to support components or tools required for tasks inside the coupling unit during a maintenance procedure.

In a preferred embodiment of the inventive drivetrain, the coupling unit comprises a first rotary part for connection to the non-drive end of the low-speed shaft, a second rotary part for connection to the drive end of the planetary gearbox and a housing to enclose the rotary parts. Because of the large dimensions of the drivetrain, a rotary part of the coupling unit can be very large and heavy. For example, a rotary part can have a diameter in the order of 2 - 3 m and may weigh about 500 - 5,000 kg. Furthermore, even though the high-speed unit is moved away from the low-speed unit, the space between these drivetrain units is still limited, making it difficult and hazardous to handle a released coupling unit part with apparatus such as the nacelle internal crane. Therefore, in a particularly preferred embodiment of the invention, the inventive handling apparatus preferably comprises a further carriage or secondary carriage adapted for mounting to the suspension assembly and for attachment to a coupling unit part.

To facilitate access to a coupling region part, the secondary carriage can also be realized to move along the suspension assembly, so that the suspended coupling unit part can be moved back and forth towards the high-speed unit or towards the low-speed unit as appropriate.

An exemplary maintenance procedure can comprise the steps of: attaching a coupling unit part to the secondary carriage, detaching the coupling unit part from the corresponding drivetrain unit, and actuating a displacement means to move the secondary carriage along the suspension assembly to reveal the drivetrain part that is in need of repair or replacement. In this way, the invention allows a technician to access a defective part in the coupling region safely and with a minimum of effort.

In a preferred embodiment of the invention, the handling apparatus includes a means of compensating for a deflection or change in alignment of the coupling unit (as a consequence of detaching the very heavy high-speed unit). This can be done by deploying a suitable alignment correction means, for example a height-adjustable platform arranged to support the high-speed unit from below during the decoupling and coupling stages, for example. Alternatively or in addition, an alignment correction means can comprise one or more hydraulic actuators arranged to force a coupling unit part into the desired temporary misalignment during the decoupling and coupling stages. The considerable own weight of the gearbox unit causes some deformation of the coupling and gearbox housing and a deflection of the gearbox input shaft relative to the main shaft. This misalignment is unavoidable and is accounted for in the drivetrain design. However, when the high-speed unit is dismounted, undesirable deformation at the non-drive end of the low-speed unit may result. Therefore, in a particularly preferred embodiment of the invention, the handling apparatus comprises an adjustable load support to counteract this effect. For example, the adjustable load support could be provided by an arrangement of tension rods and/or a support structure as described above. Alternatively, an adjustable load support could be integrated between the gearbox and the bedframe, to compensate for the gearbox weight during the disconnection of the stationary and rotary parts. In this case, the adjustable load support will be removed prior to any lateral movement of the carriage.

As a further alternative, the stationary parts are connected in a first step. Then, an alignment actuator is introduced into the coupling and/or gearbox and/or main bearing housing to force the coupling into the necessary initial misalignment state, as would be the case when subjected to the weight load deformation of the drivetrain.

The inventive handling apparatus can be installed as a permanent fixture in a wind turbine nacelle. Alternatively, part of the inventive handling apparatus can be provided as a kit which can be installed as a temporary fixture in a wind turbine nacelle. For example, such a kit can comprise a set of beams which can be assembled to give the front end anchor and the cantilever suspension assembly, the carriage(s) and the displacement means, and any additional parts such as tension rods, load compensation weight, etc. These parts can be lifted into the nacelle, for example through a hatch in the nacelle floor using a nacelle crane, and assembled inside the nacelle. Alternatively, the nacelle crane can be used to assemble a temporary maintenance crane inside the nacelle, which is larger than the nacelle crane and capable of lifting the components of the handling apparatus kit.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exemplary wind turbine drivetrain;
Figures 2 - 7 illustrate the inventive handling apparatus;
Figure 8 illustrates a prior art maintenance procedure of a wind turbine drivetrain.

In the diagrams, like numbers refer to like objects throughout. Objects in the diagrams are not necessarily drawn to scale.

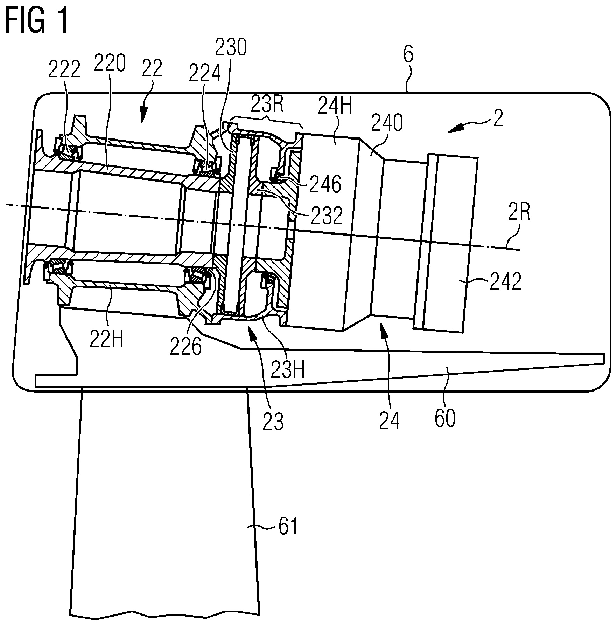

Figure 1 is a schematic illustration of an exemplary wind turbine drivetrain 2 installed inside a nacelle 6, which is supported by a tower 62 of the wind turbine (for clarity, the aerodynamic rotor is not included in the drawing). By means not shown here but familiar to the skilled person, the low-speed unit 22 of the drivetrain 2 is secured to a bedplate 60, which in turn is connected to the top of the tower 61 so that drivetrain load is transferred to the tower 61.

In this exemplary embodiment, the wind turbine can have a rated power output in the order of 5 to 20 MW, and the aerodynamic rotor of the wind turbine can have a diameter of 160 m or more. The main shaft 220 of the drivetrain of such a wind turbine can turn at a relatively slow rate, for example 8 - 12 rpm when the wind turbine is operating at its rated speed. To support the low-speed shaft 220, a main bearing arrangement is provided comprising a front bearing 222 and a rear bearing 224 at either end of the low-speed shaft 220. A housing 22H encloses the bearings 222, 224 and most of the low speed shaft 220, and is sealed to prevent contaminants from entering or leaving the housing 22H. This housing 22H is secured to the bedplate 60.

A high-speed unit 24 comprising gearbox 240 and generator 242 is mounted to the low-speed unit by means of a coupling unit 23. Here, the high-speed unit 24 comprises a planetary gearbox 240 with several stages. The generator 242 is mounted to the non-drive end of the gearbox in cantilever fashion. The high-speed unit 24 of such a drivetrain 2 can weigh in the order of 40 - 80 metric tonnes.

The low-speed shaft 220 must be connected in some way to the planetary gears of the gearbox first stage. While it is possible to connect the non-drive end of the low-speed shaft 220 directly to the gearbox first stage, it can be preferable to connect the low-speed unit 22 and high-speed unit 24 by an intermediate part or coupling unit 23 as shown here. This coupling unit 23 is constructed to be as short as possible, i.e. to connect the low-speed shaft 220 to the gearbox 240 as directly as possible for optimal torque transfer. In a preferred embodiment of the invention, the length of the drivetrain can be in the order of 6 - 10 m, and the total axial length of the coupling unit 23 is at most 1 m.

This compact construction makes it difficult to access certain components in the coupling region 23R, i.e. the region between the non-drive end of the low-speed unit 22 and the drive-end of the high-speed unit 24 (for the purposes of explanation, some parts of the drivetrain are shown in cross-section, while others are not). Since the high-speed unit 24 of such a drivetrain cannot simply be moved away from the low-speed unit 22 to access the coupling region 23R, a prior art approach to accessing a defective coupling region part requires the high-speed unit 24 of the drivetrain 2 to be dismantled.

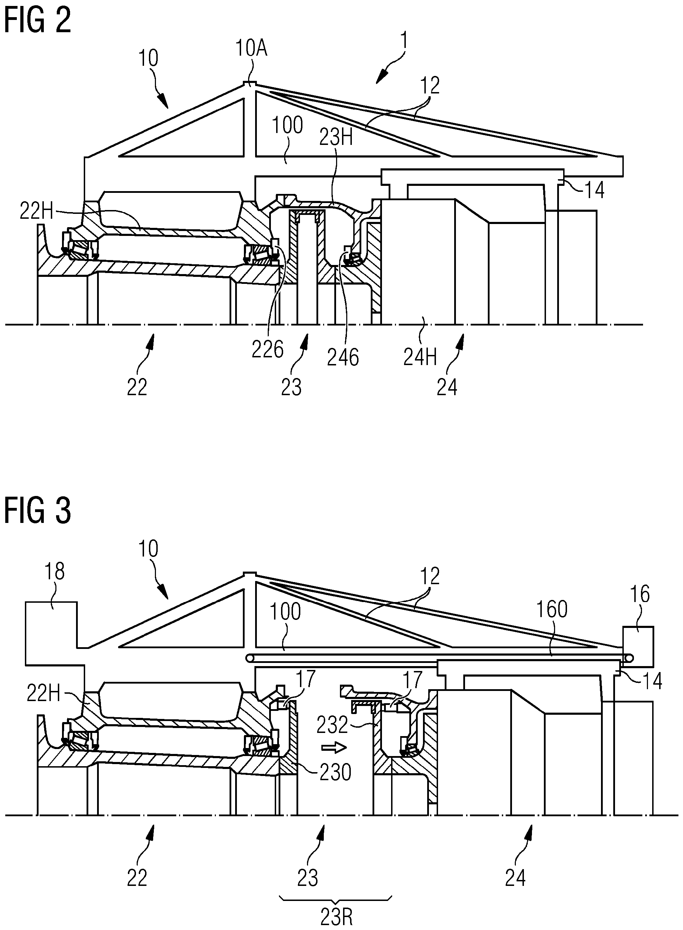

Figures 2 - 7 illustrate the invention, which provides a straightforward way of accessing a drivetrain part located in the coupling region 23R without any need to dismantle the high-speed unit 24. The drawings show an embodiment of the inventive drivetrain handling apparatus 1 installed in the nacelle 6 of a wind turbine. The handling apparatus 1 comprises a front-end anchor 10 mounted on the low-speed unit 22 and a suspension assembly 100 arranged above the drivetrain, extending from the front-end anchor 10 in line with the rotational axis 2R of the drivetrain 2, in the direction of the rear end of the nacelle. The suspension assembly 100 and front-end anchor 10 form a cantilever structure. In this exemplary embodiment, in order to optimally transfer the weight of the suspended high-speed unit 24 to the bedplate 60, a plurality of tension rods 12 extend from various points along the suspension beams 100 to the apex 10A of the front-end anchor 10.

The handling apparatus 1 also comprises a primary carriage 14 which can be connected to the high-speed unit 24 and which is arranged to travel along the suspension assembly 100. A drive unit 16 is provided to displace the primary carriage along the suspension assembly 100, so that the decoupled high-speed unit 24 is displaced relative to the low-speed unit 22.

Figure 3 illustrates further details of the handling apparatus 1, showing an exemplary arrangement of primary carriage 14, drive unit 16 and a chain 160 or similar connected to the primary carriage 14 so that it can be moved laterally along the suspension assembly 10. In this exemplary embodiment, the handling apparatus 1 also includes a counterweight 18 attached to front-end anchor 10. The counterweight serves to counteract or reduce the stresses or interface loads exerted by the front-end anchor 10 on the housing 22H of the low-speed unit 22. The diagram illustrates a subsequent stage during an exemplary maintenance procedure according to the invention. Here, the high-speed unit 24 has been moved away from the low-speed unit 22 after releasing a coupling unit 23. A technician can now access a drivetrain part in the coupling region 23R, for example a coupling unit flange 230, 232.

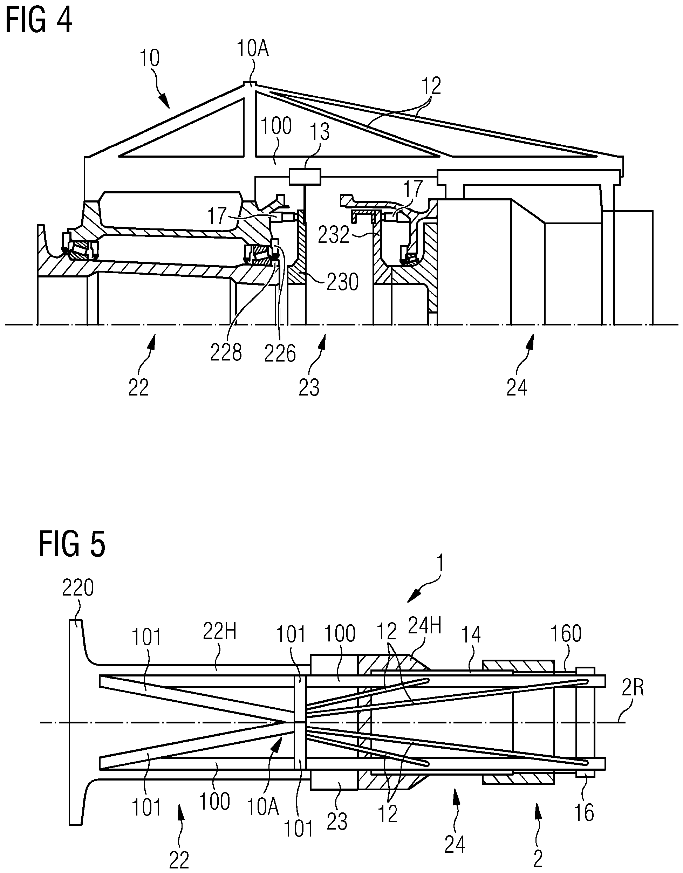

Figure 4 illustrates a stage during a further exemplary maintenance procedure according to the invention. Here, a secondary carriage 13 is connected to part of the coupling unit 23, and is operated to displace the coupling unit part so that a technician can now access a drivetrain part in the coupling region 23R, for example a main bearing seal 226 or a bearing locking mechanism 228. In this exemplary embodiment, alignment actuators 17 are arranged at suitable positions in the coupling region. These can be deployed to force components of the coupling unit 23 into an initial misalignment state before detaching and/or re-attaching the high-speed unit 24.

Figure 5 shows a plan view of an embodiment of the inventive handling apparatus 1, in place above a drivetrain 2. The diagram shows that the structure 100, 101 comprising the front end anchor 10 is less wide than the low-speed unit housing 22H, i.e. the front end anchor 10 "sits on" the low-speed unit housing 22H. Here, beams 101 of the front-end framework 10 extend diagonally upwards from the axially arranged cantilever beams 100 to meet at an apex 10A some distance above the low-speed unit 22. The long cantilever beams 100, which also form the long sides of the front end anchor 10, extend towards the rear of the drivetrain 2. A carriage 14 is attached to the high-speed unit 24 and can be moved along the cantilever beams 100 by a chain drive 16, 160. Tension rods 12 transfer loads to the apex 10A of the front-end anchor 10.

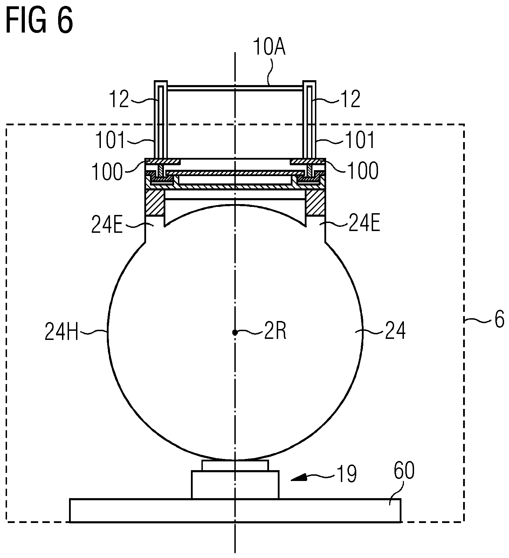

Figure 6 shows an elevation view of the inventive handling apparatus 1 in place above a wind turbine drivetrain 2, looking in the upwind direction. The drawing shows the primary carriage 14 in place on the suspension assembly 10 and connected to the housing 24H of the high-speed unit 24 by means of features 24E provided on the housing 24H. The handling apparatus 1 is constructed symmetrically about a vertical plane through the rotation axis 2R of the drivetrain. In this exemplary embodiment, the front end anchor 10 extends through the roof of the nacelle 6, which may be assumed to be designed so that one or more sections of the roof may be opened. Using the nacelle crane, the maintenance tool parts can be lifted into the nacelle (for example through a hatch in the nacelle floor, through a door in a side wall of the nacelle, or through a hatch in the nacelle roof) and then assembled as described above. The diagram also indicates an adjustable load support 19 that can be placed between the high-speed unit 24 and the bedframe 60. This adjustable load support 19 may include a hydraulic platform which can be raised or lowered as required, and which can carry some of the load of the high-speed unit 24 when this is suspended from the suspension assembly 100.

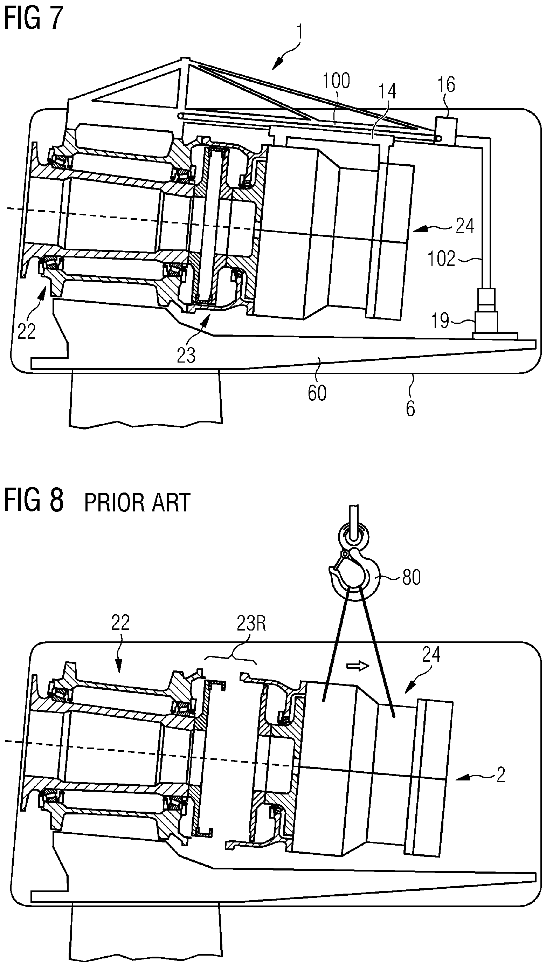

Figure 7 shows a further embodiment of the inventive handling apparatus 1. Here, the handling apparatus 1 deploys an adjustable load support 19, which in this case can be placed under a vertical beam 102 extending from the rear end of the suspension assembly 100. Here also, the adjustable load support 19 may include a hydraulic platform which can be raised or lowered as required, and which can carry some of the load of the high-speed unit 24 when this is suspended from the suspension assembly 100.

Figure 8 illustrates a prior art approach to accessing a defective part in the region 23R between the high-speed unit 22 and the low-speed unit 24 of such a drivetrain. Here, using a large external crane (indicated by the crane hook 70), the entire high-speed unit 24 has been detached from the low-speed unit 22 and moved back towards the rear of the nacelle 6 so that a technician can access a defective drivetrain part in the coupling region 23R, for example a main bearing seal, a gearbox seal, a coupling unit flange, a bearing locking mechanism etc. However, the cost of hiring such a crane can be very expensive, particularly for an offshore wind turbine installation since this also requires hire of a jack-up vessel.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A handling apparatus (1) for use in a maintenance procedure of a wind turbine drivetrain (2) comprising a low-speed unit (22) and a high-speed unit (24) coaxially coupled to the low-speed unit (22), which handling apparatus (1) is configured to be arranged in the interior of a wind turbine nacelle (6) and comprises
- a front-end anchor (10) configured for mounting onto the low-speed unit (22) of such a drivetrain (2);
- a suspension assembly (100) extending from the front-end anchor (10) towards the rear of the nacelle (6);
- a primary carriage (14) carried by the suspension assembly (100) and configured for attachment to the high-speed unit (24) of the drivetrain (2); and
- a displacement means (16, 160) realized to displace the primary carriage (14) along the suspension assembly (10) relative to the front-end anchor (10).

2. A handling apparatus according to any of the preceding claims, wherein the suspension assembly comprises a number of beams (100) arranged parallel to the rotation axis (2R) of the drivetrain (2).

3. A handling apparatus according to any of the preceding claims, comprising a plurality of tension rods (12), each arranged to extend from a point along the suspension assembly (100) to the apex (10A) of the front-end anchor (10).

4. A handling apparatus according to any of the preceding claims, comprising an alignment correction means (19) adapted to effect a displacement of the high-speed unit (24) prior to a step of decoupling from the low-speed unit (22) and/or prior to a step of coupling to the low-speed unit (22).

5. A handling apparatus according to any of the preceding claims, comprising an alignment correction means (17) adapted to effect a displacement of a coupling unit part (230, 232) prior to a step of decoupling from the low-speed unit (22) and/or prior to a step of coupling to the low-speed unit (22) .

6. A handling apparatus according to any of the preceding claims, comprising a further carriage (13) adapted for mounting to the suspension assembly (100) and for attachment to a coupling unit (23) of the drivetrain (2).

7. A handling apparatus according to any of the preceding claims, wherein the displacement means comprises a motor-driven chain drive (16, 160) adapted to displace a carriage (13, 14) along the suspension assembly (100).

8. A handling apparatus according to any of the preceding claims, realized as a kit comprising several parts (10, 100, 13, 14) for assembly within the nacelle (6).

9. A method of performing a maintenance procedure on a wind turbine drivetrain (2) comprising a low-speed unit (22) and a high-speed unit (24) coaxially coupled to the low-speed unit (22), which method comprises the steps of
- attaching the front-end anchor (10) of a handling apparatus (1) according to any of claims 1 to 8 to the low-speed unit (22);
- arranging the suspension assembly (100) of the handling apparatus (1) to extend towards the rear of the nacelle (6) ;
- attaching the high-speed unit (24) to the primary carriage (14) of the handling apparatus (1);
- uncoupling the high-speed unit (24) from the low-speed unit (22); and
- actuating the drive unit (16) of the handling apparatus (1) to displace the carriage (14) along the suspension assembly (10) relative to the front-end anchor to reveal a drivetrain part (226, 228, 230, 232, 246) in a coupling region (23R) between the low-speed unit (22) and a high-speed unit (24).

10. A method according to the preceding claim, comprising the steps of:
- attaching a coupling unit component (230, 232) to a secondary carriage (13) of the handling apparatus (1);
- detaching the coupling unit component (230, 232) from the corresponding drivetrain unit (2, 4);
- actuating the displacement means (16, 160) to move the secondary carriage (13) along the suspension assembly (10) to reveal a drivetrain part (226, 228, 230, 232, 246) requiring maintenance.

11. A method according to any of the preceding method claims, comprising a step of actuating an alignment correction means (17, 19) prior to a step of uncoupling the high-speed unit (24) from the low-speed unit (22) and/or prior to a step of coupling the high-speed unit (24) to the low-speed unit (22).

12. A method according to any of the preceding method claims, wherein a drivetrain part is any of: a main bearing seal (226), a gearbox seal (246), a coupling unit flange (230, 232), a bearing locking mechanism (228).

13. A wind turbine drivetrain (2) comprising a low-speed unit (22), a high-speed unit (24) and a coupling unit (23) for coaxially coupling the low-speed unit (22) to the high-speed unit (24), and wherein
- a housing (22H) of the low-speed unit (22) comprises an interface (22E) for engaging with the front-end anchor (10) of a handling apparatus (1) according to any of claims 1 to 7; and
- a housing (24H) of the high-speed unit (24) comprises an interface (24E) for engaging with the primary carriage (14) of the handling apparatus (1).

14. A wind turbine drivetrain according to claim 13, wherein the low-speed unit (22) comprises a low-speed shaft (220), a bearing arrangement (222, 224), and the low-speed unit housing (22H); and wherein the high-speed unit (24) comprises a planetary gearbox (240), a generator (242 mounted to the output shaft of the planetary gearbox (240), and the high-speed unit housing (24H).

15. A wind turbine drivetrain according to any of claims 13 to 14, wherein the coupling unit (23) comprises a first rotary part (230) for connection to the low-speed shaft (220), a second rotary part (232) for connection to the drive end of the planetary gearbox (240), and a housing (23H) to enclose the rotary parts (230, 232).
